# FASCICULE DE BREVET EUROPEEN

(11) **EP 3 580 944 B1**
(45) Date de publication et mention de la délivrance du brevet: **15.12.2021**
(21) Numéro de dépôt: 18707085.9
(22) Date de dépôt: 06.02.2018
(51) Int. Cl.: H04W 8/18, H04W 4/60

(54) **TECHNIQUE D'ADMINISTRATION D'UNE SOUSCRIPTION AUPRÈS D'UN OPÉRATEUR**
VERFAHREN ZUR VERWALTUNG EINES ABONNEMENTS BEI EINEM BETREIBER
TECHNIQUE FOR ADMINISTRATING A SUBSCRIPTION AT AN OPERATOR

(30) Priorité: 09.02.2017 FR 1751070
(43) Date de publication de la demande: 18.12.2019
(73) Titulaire: ORANGE, 92130 Issy-les-Moulineaux (FR)
(72) Inventeur: SCHOULER, Eric, 92326 Châtillon Cedex (FR)
(86) Numéro de dépôt international: PCT/FR2018/050283
(87) Numéro de publication internationale: WO 2018/146407

(56) Documents cités:
- EP-A1- 2 925 032
- EP-A1- 2 963 955
- EP-A1- 2 975 870
- EP-A1- 3 073 770
- US-A1- 2016 301 529
- SAMSUNG: "Updates to Solution #12.4 to detail EAP-TLS authentication procedure", 3GPP DRAFT; S3-161803-REMOTEEAP-TLS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3 6 novembre 2016 (2016-11-06), XP051185874, Extrait de l'Internet: URL:http://www.3gpp.org/ftp/Meetings_3GPP_ SYNC/SA3/Docs/ [extrait le 2016-11-06]

## Description

L'invention se rapporte au domaine général des télécommunications.

L'invention concerne plus particulièrement une technique d'administration d'une souscription auprès d'un opérateur. Plus précisément, cette technique se place dans un contexte dans lequel un profil d'accès a été obtenu pour un module de sécurité.

Cette technique d'administration se situe dans le domaine des terminaux de communication mobile, et plus particulièrement des cartes eUICC dites embarquées (« embedded »). Une carte eUICC embarquée permet à un dispositif utilisateur mobile de fonctionner avec des abonnements auprès de plusieurs opérateurs avec une seule et même carte eUICC qui peut être non amovible.

L'association GSMA (pour « Global System for Mobile Communications ») développe des spécifications techniques pour une carte de type « eUICC » (de l'anglais « embedded Universal Integrated Circuit Card ») jouant le rôle d'un module de sécurité, prévue pour être embarquée dans un dispositif utilisateur mobile. Un tel module de sécurité peut être inamovible et il est alors nécessaire d'effectuer des actions à distance, par exemple le programmer. La spécification technique de la GSMA « SGP.22 - RSP Technical Spécification » v.2.0 datée du 14 octobre 2016 spécifie une gestion de configuration à distance d'une carte eUICC (ou module de sécurité). Ainsi, lors de l'acquisition d'un nouveau terminal mobile, il n'est plus nécessaire de manipuler au préalable le module de sécurité afin d'accéder au réseau d'un opérateur, voire de le changer lors d'un changement d'opérateur. Un profil d'accès correspond à un ensemble de données et d'applications qui permettent au terminal mobile, une fois le profil activé, d'accéder au réseau d'un opérateur. Il est prévu qu'un utilisateur puisse s'abonner directement via une interface homme-machine de son dispositif utilisateur, ou en se rendant dans une boutique de l'opérateur ou/et qu'il installe un profil d'accès au réseau. Il est également prévu qu'il puisse changer d'opérateur de la même façon.

Pour ce faire, l'utilisateur obtient un code d'activation AC (pour « Activation Code ») lui permettant de contacter un serveur chargé de la préparation des données de gestion de souscription SM-DP+ (pour « Subscription Manager Data Preparation+ ») afin de télécharger un profil d'accès qui a été préparé pour lui. Ce code d'activation comprend notamment une adresse du serveur SM-DP+ à contacter pour obtenir le profil d'accès et une référence permettant au serveur d'identifier ce profil d'accès.

L'art antérieur pertinent est divulgué dans EP 2 925 032 A1, US 2016/301529 A1, EP 2 975 870 A1 et EP 2 963 955 A1.

Pour administrer une souscription, un utilisateur ou un gestionnaire d'une flotte de dispositifs utilisateur mobiles doit se connecter sur un portail de l'opérateur, s'authentifier, rechercher sa souscription auprès de cet opérateur, puis effectuer l'acte d'administration souhaité.

Cette solution n'est donc pas satisfaisante pour l'utilisateur ou le gestionnaire de flotte car elle nécessite de nombreuses interactions avec le système d'information de l'opérateur.

Un des buts de l'invention est de remédier à des insuffisances/inconvénients de l'état de la technique et/ou d'y apporter des améliorations.

Selon un premier aspect, l'invention a pour objet un procédé d'administration d'une souscription auprès d'un opérateur, ladite souscription permettant un accès à un réseau de communication pour un module de sécurité associé à un dispositif utilisateur. Ce procédé comprend :
- une obtention par le dispositif utilisateur à partir d'un profil d'accès au réseau de communication installé dans le module de sécurité d'une adresse de contact d'un serveur configuré pour préparer des données de gestion de souscription ;
- un envoi par le module de sécurité d'une requête d'exécution d'un acte d'administration en relation avec ladite souscription, la requête étant adressée à l'adresse de contact du serveur et comprenant une donnée d'identification permettant audit serveur de faire suivre la requête à un serveur de contrôle de l'opérateur identifié par ladite donnée d'identification;
- une réception par le dispositif utilisateur d'une confirmation d'exécution dudit acte d'administration.

Corrélativement, l'invention a également pour objet un procédé d'administration d'une souscription auprès d'un opérateur, ladite souscription permettant un accès à un réseau de communication pour un module de sécurité associé à un dispositif utilisateur. Ce procédé comprend :
- une réception par un serveur configuré pour préparer des données de gestion de souscription d'une requête d'exécution d'un acte d'administration en relation avec ladite souscription en provenance du module de sécurité, la requête étant adressée à l'adresse de contact du serveur et comprenant une donnée d'identification permettant audit serveur de faire suivre la requête à un serveur de contrôle de l'opérateur identifié par ladite donnée d'identification, ladite adresse ayant été obtenue à partir d'un profil d'accès au réseau de communication installé dans le module de sécurité ;
- une transmission de la requête d'exécution par ledit serveur au serveur de contrôle en fonction de ladite donnée ;
- une transmission d'une confirmation d'exécution dudit acte d'administration reçue du serveur de contrôle vers le dispositif utilisateur.

Grâce à cette technique, l'utilisateur ou le gestionnaire de flotte peut réaliser de manière très simple un acte d'administration dans le cadre d'une souscription comprenant le module de sécurité associé au dispositif utilisateur. En effet, l'utilisateur ou le gestionnaire de flotte commande cet acte d'administration directement à partir du terminal mobile, formé du dispositif utilisateur et du module de sécurité, sans avoir besoin d'interagir avec un système de gestion des souscriptions. Il n'est pas nécessaire pour l'utilisateur ou le gestionnaire de flotte de connaître et de renseigner un numéro contractuel de souscription pour se connecter à un portail de l'opérateur gérant la souscription. De plus, aucune authentification n'est nécessaire. Dans un mode de réalisation particulier, cette demande d'exécution d'un acte d'administration est effectuée au moyen d'une interface homme-machine offerte par le dispositif utilisateur.

De plus, la technique d'administration d'une souscription est applicable à différents types de modules de sécurité, tels que des cartes de type « eUICC », des cartes à puce avec un système d'exploitation offrant les fonctionnalités d'une carte de type eUICC.

Dans cette technique, l'adresse de contact permettant au module de sécurité de contacter le serveur qui est en charge de la préparation des données de gestion de souscription pour l'opérateur du réseau de communication est comprise dans le profil d'accès. Une fois le profil d'accès téléchargé et installé dans le module de sécurité, il est alors possible d'accéder au profil d'accès pour obtenir l'adresse de contact. On rappelle ici que selon la technique antérieure un module de sécurité obtient cette adresse de contact à partir d'un code d'activation qui a été préparé pour lui pour télécharger un profil d'accès. Une fois le profil d'accès téléchargé et installé, le code d'activation est supprimé de la mémoire du dispositif utilisateur.

La donnée envoyée par le module de sécurité permet au serveur chargé de la préparation des données de gestion de souscription d'identifier l'opérateur gérant la souscription et d'interroger ainsi un serveur de contrôle de cet opérateur. Le serveur délègue le traitement de la demande d'exécution de l'acte d'administration. Le serveur de contrôle identifié peut alors fournir au serveur chargé de la préparation des données de gestion de souscription, si un tel acte est autorisé, une réponse à transmettre au module de sécurité et au dispositif utilisateur.

Les échanges pour requérir une exécution de l'acte d'administration s'effectue ainsi par l'intermédiaire du serveur SMDP+. On rappelle ici que dans l'architecture définie par la GSMA, un tunnel est établi entre le module de sécurité et le serveur SM-DP+. Ceci permet de protéger des données envoyées avec la requête. Cette technique n'implique pas la transmission, en dehors d'interfaces protégées, d'identifiant sensible, tel que l'identifiant d'accès de l'utilisateur auprès de l'opérateur de réseau. Cet identifiant d'accès est plus généralement connu sous le nom d'IMSI (pour « International Mobile Subscriber Identity ») et permet d'identifier de manière unique l'utilisateur dans le réseau de l'opérateur.

Les différents modes ou caractéristiques de réalisation mentionnés ci-après peuvent être ajoutés indépendamment ou en combinaison les uns avec les autres, au procédé d'administration d'une souscription tel que défini précédemment.

Dans un mode de réalisation particulier du procédé d'administration, la confirmation d'exécution comprend une adresse de localisation d'un portail auquel le dispositif utilisateur se connecte.

Par l'intermédiaire de cette adresse de localisation, il est ainsi possible de mettre en place des échanges entre le portail et un utilisateur du dispositif. Ceci permet d'obtenir des données complémentaires, nécessaires à la finalisation de l'exécution de l'acte d'administration dans le système d'information de l'opérateur.

Selon une caractéristique particulière du procédé d'administration, l'adresse de localisation est propre au module de sécurité et permet au portail de retrouver le contexte de la requête d'exécution de l'acte d'administration en interrogeant le serveur de contrôle.

Selon une caractéristique particulière alternative du procédé d'administration, la confirmation d'exécution comprend en outre une référence associée à un contexte de la requête d'exécution de l'acte d'administration.

La référence allouée par le serveur de contrôle permet au portail de retrouver le contexte de la requête d'exécution de l'acte d'administration en interrogeant le serveur de contrôle.

Dans un mode de réalisation particulier du procédé d'administration, la donnée permettant au serveur d'interroger le serveur de contrôle est obtenue à partir du profil d'accès.

Dans cette technique, la donnée permettant au serveur chargé de la préparation des données de gestion de souscription pour l'opérateur du réseau de communication de faire suivre la requête d'exécution d'un acte d'administration est comprise dans le profil d'accès. Une fois le profil d'accès téléchargé et installé dans le module de sécurité, il est alors possible d'accéder au profil d'accès pour obtenir cette donnée. Ceci simplifie la mise en œuvre du procédé pour l'utilisateur ou le gestionnaire de flotte. Il s'agit par exemple d'un identifiant de l'opérateur.

Dans un mode de réalisation particulier du procédé d'administration, le dispositif utilisateur obtient du module de sécurité la donnée permettant au serveur d'interroger le serveur de contrôle.

Le module de sécurité, une fois un profil d'accès téléchargé, est identifié par un identifiant de profil d'accès ICCID (pour « Integrated Circuit Card ID ») qui est unique. Dans ce mode de réalisation, la donnée permettant au serveur d'interroger le serveur de contrôle est déduite à partir de cet identifiant ICCID. Ceci simplifie la mise en œuvre du procédé pour l'utilisateur ou le gestionnaire de flotte.

L'adresse de contact du serveur ainsi que la donnée permettant au serveur d'interroger le serveur de contrôle sont par exemple mémorisées dans des données du profil d'accès qui est téléchargé. Ceci permet au module de sécurité, qui a mémorisé un profil d'accès, de retrouver aisément ces données.

Dans un mode de réalisation particulier du procédé d'administration, la donnée permettant au serveur d'interroger le serveur de contrôle permet en outre au serveur de contrôle d'identifier la souscription. A titre illustratif, le serveur de contrôle peut déterminer à partir de l'identifiant de profil d'accès ICCID quelle est la souscription associée. L'utilisateur ou le gestionnaire de flotte n'a ainsi pas besoin de fournir un identifiant de souscription.

Dans un mode de réalisation particulier du procédé d'administration, la requête envoyée comprend en outre un identifiant de souscription auprès de l'opérateur.

Dans ce mode de réalisation, la donnée permettant au serveur d'interroger le serveur de contrôle permet d'identifier l'opérateur de réseau et l'identifiant de souscription est fourni en complément.

Dans un mode de réalisation particulier du procédé d'administration, l'acte d'administration appartient au groupe comprenant :
- une demande de modification d'une souscription ;
- une demande d'un code d'activation ;
- une suspension du profil d'accès.

Selon un deuxième aspect, l'invention concerne également un dispositif utilisateur auquel est associé un module de sécurité. Ce dispositif comprend :
- un module de commande, agencé pour obtenir à partir d'un profil d'accès au réseau de communication installé dans le module de sécurité une adresse de contact d'un serveur configuré pour préparer des données de gestion de souscription et pour commander au module de sécurité d'envoyer une requête d'exécution d'un acte d'administration en relation avec une souscription auprès d'un opérateur, ladite souscription permettant un accès à un réseau de communication pour le module de sécurité associé au dispositif utilisateur, la requête étant adressée à l'adresse de contact du serveur et comprenant une donnée d'identification permettant audit serveur de faire suivre la requête à un serveur de contrôle de l'opérateur identifié par ladite donnée d'identification;
- un module de réception d'une confirmation d'exécution dudit acte d'administration.

Ce dispositif utilisateur peut bien sûr comporter en termes structurels les différentes caractéristiques relatives au procédé d'administration d'une souscription tel que décrit précédemment, qui peuvent être combinées ou prises isolément. Ainsi, les avantages énoncés pour le procédé d'administration d'une souscription selon le premier aspect sont transposables directement au dispositif utilisateur. Par conséquent, ils ne sont pas détaillés plus amplement.

Selon un troisième aspect, l'invention concerne également un serveur configuré pour préparer des données de gestion de souscription. Ce serveur comprend :
- un module de traitement, agencé pour recevoir une requête d'exécution d'un acte d'administration en relation avec une souscription auprès d'un opérateur en provenance d'un module de sécurité, ladite souscription permettant un accès à un réseau de communication pour le module de sécurité associé à un dispositif utilisateur, la requête étant adressée à l'adresse de contact du serveur et comprenant une donnée d'identification permettant audit serveur de faire suivre la requête à un serveur de contrôle de l'opérateur identifié par ladite donnée d'identification, ladite adresse ayant été obtenue à partir d'un profil d'accès au réseau de communication installé dans le module de sécurité, et pour transmettre la requête d'exécution au serveur de contrôle en fonction de ladite donnée et pour transmettre une confirmation d'exécution dudit acte d'administration reçue du serveur de contrôle vers le dispositif utilisateur.

Ce serveur est un serveur chargé de la préparation des données de gestion de souscription SM-DP+. Les avantages énoncés pour le procédé d'administration d'une souscription selon le premier aspect sont transposables directement au serveur. Par conséquent, ils ne sont pas détaillés plus amplement.

Selon un quatrième aspect, l'invention concerne également un système comprenant un dispositif utilisateur selon le deuxième aspect, un serveur configuré pour préparer des données de gestion de souscription selon le troisième aspect et un serveur de contrôle. Ce serveur de contrôle comprend :
- un module de traitement, agencé pour exécuter un acte d'administration en relation avec une souscription en réponse à une requête d'exécution reçue du serveur configuré pour préparer des données de gestion de souscription et pour envoyer une confirmation d'exécution dudit acte d'administration vers le serveur configuré pour préparer des données de gestion de souscription.

Les avantages énoncés pour le procédé d'administration d'une souscription selon le premier aspect sont transposables directement au système. Par conséquent, ils ne sont pas détaillés plus amplement.

Selon un cinquième aspect, l'invention concerne un programme pour un dispositif utilisateur, comprenant des instructions de code de programme destinées à commander l'exécution de celles des étapes du procédé d'administration d'une souscription précédemment décrit mises en œuvre par le dispositif utilisateur, lorsque ce programme est exécuté par ce dispositif et un support d'enregistrement lisible par un serveur sur lequel est enregistré un programme pour un dispositif.

Les avantages énoncés pour le procédé d'administration d'une souscription selon le premier aspect sont transposables directement au programme pour un dispositif et au support d'enregistrement.

Selon un sixième aspect, l'invention concerne un programme pour un serveur, comprenant des instructions de code de programme destinées à commander l'exécution de celles des étapes du procédé d'administration d'une souscription précédemment décrit mises en œuvre par le serveur, lorsque ce programme est exécuté par ce serveur et un support d'enregistrement lisible par un serveur sur lequel est enregistré un programme pour un serveur.

Les avantages énoncés pour le procédé d'administration d'une souscription selon le premier aspect sont transposables directement au programme pour un serveur et au support d'enregistrement.

La technique d'administration d'une souscription à un réseau de communication sera mieux comprise à l'aide de la description suivante de modes de réalisation particuliers, en référence aux dessins annexés sur lesquels :
- la figure 1 représente un environnement dans lequel est mis en œuvre le procédé d'administration d'une souscription dans un mode de réalisation particulier ;
- la figure 2a illustre des étapes d'un procédé d'administration d'une souscription à un réseau de communication selon un premier mode particulier de réalisation ;
- la figure 2b illustre des étapes d'un procédé d'administration d'une souscription à un réseau de communication selon un deuxième mode particulier de réalisation ;
- la figure 3 représente un dispositif utilisateur selon un mode particulier de réalisation ;
- la figure 4 représente un serveur selon un mode particulier de réalisation.

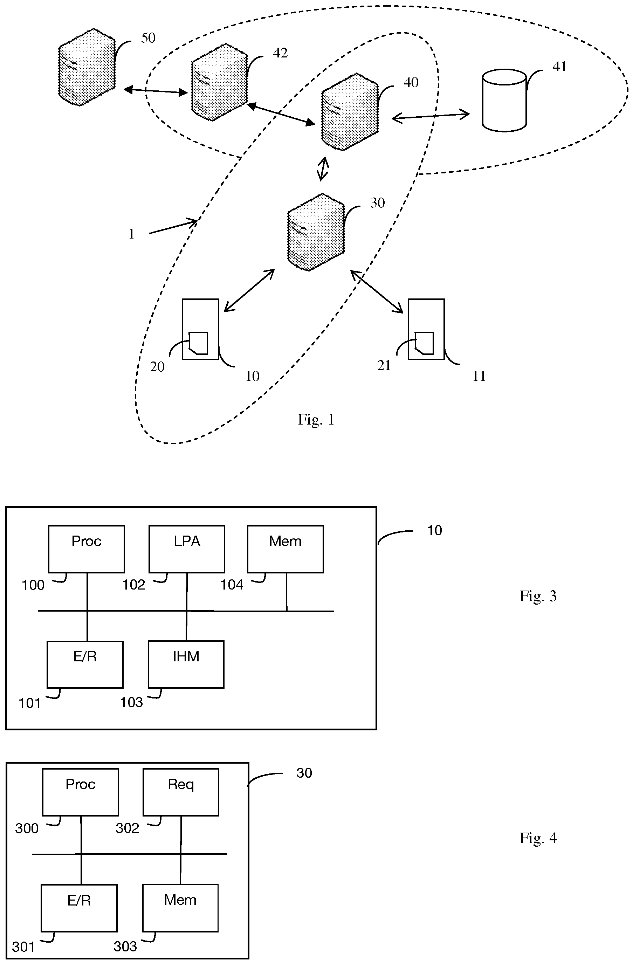

La **figure 1** représente un environnement dans lequel est mis en œuvre le procédé d'administration d'une souscription à un réseau de communication dans un mode de réalisation particulier.

Dans la suite de la description, on présente des exemples de plusieurs modes de réalisation s'appliquant à un module de sécurité de type carte eUICC tel qu'en cours de normalisation dans le cadre de l'association GSMA, mais le procédé d'administration d'une souscription s'applique également à d'autres types de module de sécurité. Plus généralement, le module de sécurité est une plateforme dédiée inviolable, comprenant du matériel et du logiciel, apte à héberger de manière sécurisée des applications et leurs données confidentielles et cryptographiques et fournissant un environnement d'exécution d'applications sécurisé, par exemple une carte de type UICC.

La description qui suit se place dans le contexte des spécifications techniques, telles que définies par l'association GSMA. Plus précisément, l'architecture de la gestion de configuration à distance est définie dans la spécification technique SGP.21 « RSP Architecture », version 2.0, datée du 23 août 2016 et les procédures sont définies dans la spécification technique SGP.22 « RSP Technical Spécification » version 2.0 datée du 14 octobre 2016.

Un dispositif utilisateur 10, auquel un module de sécurité 20 est associé, est agencé pour accéder au réseau d'un opérateur mobile au moyen d'un profil d'accès au réseau généré par cet opérateur pour ce module de sécurité. Le dispositif utilisateur 10 en association avec le module de sécurité 20 forment un premier terminal mobile. Plus précisément, le profil d'accès est généré pour ce module de sécurité par un serveur de gestion de données de souscription, non représenté sur la figure 1, lié à l'opérateur. Le profil d'accès comprend une application d'accès au réseau et des données d'accès associées (on parle de « credentials » en anglais), telles que des clés cryptographiques et des algorithmes. Le profil d'accès une fois autorisé permet un accès à une infrastructure d'un réseau mobile de cet opérateur. Il permet notamment d'authentifier le terminal mobile, plus précisément le module de sécurité 20, lors d'un accès au réseau de l'opérateur. Un deuxième dispositif utilisateur 11 et son module de sécurité 21 associé sont également représentés sur la figure 1. Le dispositif utilisateur 11 en association avec le module de sécurité 21 forment un deuxième terminal mobile.

Le réseau de communication de l'opérateur mobile, appelé réseau mobile, est par exemple un réseau de communication sans fil de type 3G ou 4G, tel que normalisé par le 3GPP. Les dispositifs utilisateur 10, 11 comprennent chacun un module de communication, agencé pour accéder au réseau de communication.

Le profil d'accès est identifié par un numéro unique ICCID (pour « Integrated Circuit Card ID ») permettant d'identifier le profil d'accès dans un module de sécurité.

Le module de sécurité 20, 21 est typiquement une carte de type « eUICC » (de l'anglais « embedded Universal Integrated Circuit Card »), également appelée « eSIM » (de l'anglais « embedded Subscriber Identity Module »), ou carte SIM embarquée ou inamovible. Aucune limitation n'est attachée à ce type de carte. Dans un mode de réalisation particulier, le module de sécurité 20, 21 est une carte à puce avec un système d'exploitation offrant les fonctionnalités d'une carte de type eUICC. Dans un autre mode de réalisation particulier, le module de sécurité 20, 21 est intégré dans le dispositif utilisateur 10, 11 formant ainsi une seule entité. Chaque module de sécurité 20, 21 est identifié par un identifiant de module de sécurité EID (pour « eUICC-ID »).

Sur la figure 1 est également représenté un serveur de contrôle opérationnel 40, par exemple intégré au système d'information de l'opérateur de réseau. Ce serveur de contrôle 40 est agencé pour coordonner les différentes opérations de configuration dans le système d'information et dans le réseau de l'opérateur lors d'une souscription d'un nouvel utilisateur, d'une modification d'une souscription ou bien lors d'une obtention d'un profil d'accès. Le serveur de contrôle 40 interagit en particulier avec un serveur 30 apte à fournir par téléchargement à un module de sécurité un profil d'accès qui a été préparé pour lui. Ce serveur est chargé de la préparation des données de gestion de souscription SM-DP+ (pour « Subscription Manager Data Préparation »). Le rôle de ce serveur est de :
- préparer des dossiers de profil (« Profile Package » en anglais),
- mémoriser des clés de protection de profil de manière sécurisée et des dossiers de profil protégés dans une zone mémoire, et
- allouer des dossiers de profil en fonction d'un identifiant de module de sécurité.

Le serveur 30 lie un dossier de profil protégé à un module de sécurité et télécharge, une fois une session sécurisée de téléchargement établie, ce ou ces profils d'accès liés à une application LPA (pour « Local Profile Assistant ») s'exécutant sur le dispositif utilisateur.

Sur la figure 1, figure également une base de données 41 accessible par le serveur de contrôle 40. Cette base de données 41 est un référentiel permettant de mémoriser des informations de souscription pour cet opérateur.

Le serveur de contrôle 40 est un serveur du système de support opérationnel OSS (pour « Opération Support System »). Le serveur de contrôle 40 opérationnel communique avec un serveur 42 de contrôle du système de support commercial BSS (pour « Business Support System »). Ce système de support commercial BSS est plus précisément en charge de la gestion client, de la gestion des données d'une commande, de la facturation et de la tarification. Un seul serveur de contrôle est représenté pour chacun des systèmes support. Il est bien entendu que chacun de ces systèmes peut comprendre un ou plusieurs serveurs.

Un site web ou un portail 50 est agencé pour interagir avec un utilisateur et pour communiquer avec le serveur de contrôle opérationnel 40 et le serveur de contrôle commercial 42.

Il est ici souligné que par souci de simplification, d'autres équipements notamment en charge de l'exploitation et de la maintenance, de la facturation, de la prise de commande, ... ne sont pas représentés sur cette figure 1. Il en est de même pour des équipements du réseau de l'opérateur.

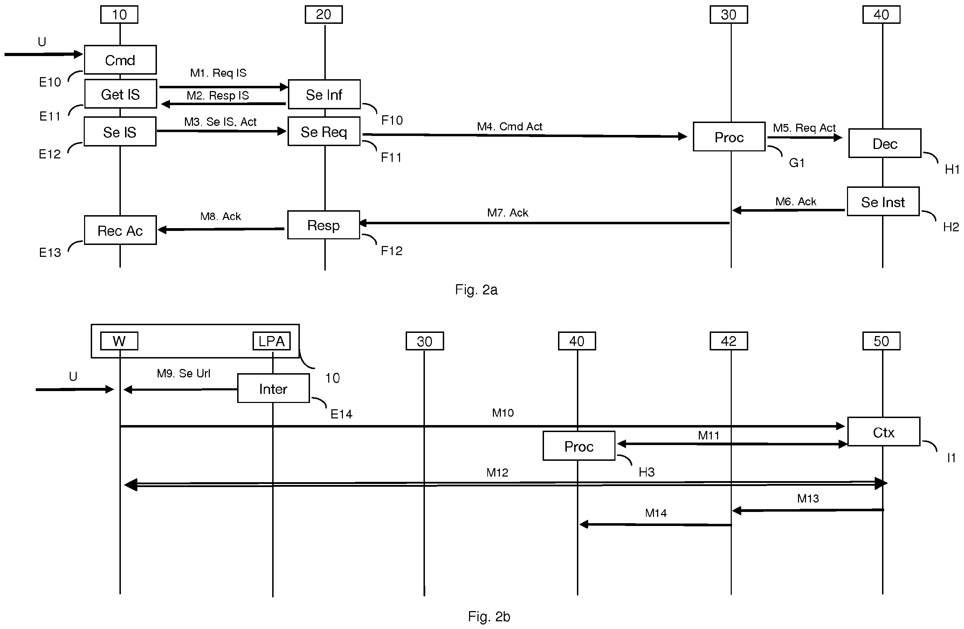

Le procédé d'administration d'une souscription auprès d'un opérateur va maintenant être décrit en relation avec la **figure 2a** dans un premier mode particulier de réalisation.

A l'état initial, on suppose que l'utilisateur du dispositif utilisateur 10 et du module de sécurité 20 a souscrit à un abonnement auprès d'un opérateur de réseau de communication. En retour, il a obtenu un code d'activation AC (pour « Activation Code ») qui lui a permis d'installer sur le module de sécurité 20 un profil d'accès au réseau ICCID. Une fois le profil d'accès installé, l'utilisateur peut accéder au réseau de communication et à des services fournis par l'opérateur du réseau dans le cadre de son contrat de souscription. Le module de sécurité 20 a ainsi obtenu un profil d'accès au réseau en relation avec cette souscription.

Un utilisateur ou un gestionnaire de flotte a décidé d'effectuer un acte d'administration en relation avec cette souscription.

Cette demande d'exécution d'un acte d'administration peut être transmise au moyen d'une interface homme-machine d'une application proposée par l'opérateur sur le dispositif utilisateur 10. Aucune limitation n'est attachée à la manière de transmettre cette commande. Dans un mode de réalisation particulier, cette application proposée par l'opérateur correspond à l'application LPA. L'acte d'administration correspond par exemple à une demande de modification d'une souscription, une demande d'un code d'activation, une suspension du profil d'accès. Une telle suspension du profil d'accès peut être envisagée lors de la maintenance du terminal mobile. A titre illustratif, la souscription permet d'associer un unique module de sécurité. Quatre choix peuvent être proposés dans un menu d'interaction : « ajouter un deuxième module de sécurité à ma souscription », « souscrire à une option multi-modules de sécurité à partir de ma souscription actuelle », « transférer ma souscription vers un nouveau module de sécurité », « suspendre un profil d'accès ».

Le dispositif utilisateur 10 reçoit ainsi dans une étape E10 une commande d'exécution d'un acte d'administration en relation avec une souscription auprès de l'opérateur.

Dans une étape E11, le dispositif utilisateur 10, plus précisément l'application LPA, demande par un message M1 au module de sécurité 20 de lui fournir l'adresse de contact du serveur 30 chargé de la préparation des données de gestion de souscription, une donnée d'identification et un identifiant de souscription ID_S. La donnée d'identification permet au serveur SM-DP+ 30 de déterminer (notamment lorsque ce serveur SM-DP+ est partagé par plusieurs opérateurs) puis d'interroger le serveur de contrôle opérationnel 40 pour faire suivre une requête d'exécution d'un acte d'administration, comme décrit ultérieurement. Elle correspond par exemple à un identifiant de l'opérateur. L'identifiant de souscription ID_S permet d'identifier la souscription qui est associée à la requête. Dans un exemple de réalisation, l'identifiant de souscription correspond à un numéro de contrat dans le système d'information de l'opérateur. Le numéro de contrat est par exemple mémorisé dans le profil d'accès au moyen d'une action de personnalisation de celui-ci, nécessitant une génération dynamique du profil d'accès. Dans un autre exemple de réalisation, l'identifiant de souscription correspond à l'identifiant du profil d'accès ICCID qui a été téléchargé dans le module de sécurité 20.

On se place par la suite dans le cas où ces informations ont été fournies au module de sécurité 20 lors de la distribution du profil d'accès ICCID dans des données associées à ce profil d'accès. Ces données sont renseignées par l'opérateur. La donnée d'identification peut par exemple correspondre à un identifiant d'opérateur dans les données. Dans un autre exemple de réalisation, la donnée d'identification correspond à un champ « Service Provider Name » présent dans des métadonnées associées au profil d'accès. Dans un autre exemple de réalisation, la donnée d'identification correspond au couple MCC (pour « Mobile Country Code »), MNC (pour « Mobile Network Code »).

Le message M1 est reçu par le module de sécurité 20 dans une étape F10. En réponse, le module de sécurité 20 envoie un message M2, comprenant l'adresse de contact du serveur SM-DP+ 30, la donnée d'identification et l'identifiant de souscription ID_S.

Dans une étape E12, le dispositif utilisateur 10, plus précisément l'application LPA de ce dispositif, envoie un message M3 au module de sécurité 20. Ce message M3 porte une information relative à un acte d'administration à exécuter et comprend notamment l'adresse de contact du serveur SM-DP+, la donnée d'identification et l'identifiant de souscription ID_S. Il est destiné à déclencher un envoi par le module de sécurité 20 d'une requête d'exécution d'un acte d'administration en association avec la souscription d'identifiant ID_S.

Le message M3 est reçu par le module de sécurité 20 dans une étape F11. Toujours dans cette étape F11, le module de sécurité 20 envoie un message M4 représentant un certificat signé et contenant les données décrites ainsi que l'identifiant de module de sécurité EID et la requête d'exécution d'un acte d'administration au serveur SM-DP+ 30 par l'intermédiaire du dispositif utilisateur 10. Plus précisément, comme illustré à la figure 10 « Common Mutual Authentication Procédure » de la spécification technique SGP 22 v2.0, ce message est envoyé dans un premier tunnel établi entre le dispositif utilisateur 10, plus précisément l'application LPA s'exécutant sur le dispositif utilisateur 10, et le serveur SM-DP+ 30, s'appuyant sur un deuxième tunnel établi entre le module de sécurité 20 et le serveur SM-DP+ 30. On souligne ici que par simplification, la figure 2a représente une relation directe entre le module de sécurité 20 et le serveur SMDP+ 30 alors que le message M4 transite par le dispositif utilisateur 10 pour atteindre le serveur SMPD+ 30. Ce message M4 est adressé au serveur SM-DP+ 30 à l'adresse de contact et comprend notamment l'acte d'administration à exécuter, la donnée d'identification permettant au serveur SM-DP+ 30 de faire suivre la requête au serveur de contrôle opérationnel 40, l'identifiant de souscription ID_S, associé à l'acte d'administration à exécuter, et l'identifiant de module de sécurité EID. Lorsque l'acte d'administration à exécuter correspond à une demande de code d'activation pour un autre module de sécurité, par exemple le module de sécurité 21, le message M4 comprend en outre l'identifiant de module de sécurité EID de celui-ci.

Ce message M4 est reçu par le serveur SM-DP+ 30 dans une étape G1. Le serveur SM-DP+ 30 détermine qu'il s'agit d'une requête à faire suivre au système d'information d'un opérateur. Dans un exemple de réalisation, le serveur SM-DP+ détecte la présence d'un objet de données de type « action ». Le serveur SM-DP+ 30 envoie alors un message M5 au serveur de contrôle opérationnel 40 de l'opérateur identifié par la donnée d'identification reçue. Ce message M5 de requête d'exécution d'un acte d'administration comprend notamment l'acte d'administration à exécuter, l'identifiant de souscription ID_S et l'identifiant de module de sécurité EID. L'interface entre le serveur SM-DP+ 30 et le serveur de contrôle opérationnel 40, appelée interface ES2+ et définie dans les spécifications de l'Association GSMA, est ainsi adaptée pour permettre l'envoi du message M5, permettant au serveur SM-DP+ 30 de faire suivre une requête d'exécution d'un acte d'administration au serveur de contrôle opérationnel 40.

Le message M5 est reçu par le serveur de contrôle opérationnel 40 dans une étape H1. Le serveur de contrôle opérationnel 40 détermine en fonction de l'acte d'administration à exécuter et de la souscription courante, reçus dans le message M5, les actions qui doivent être mises en œuvre dans le système d'information de l'opérateur. Ces actions ne sont pas plus détaillées ici.

Dans une étape H2, le serveur de contrôle opérationnel 40 envoie un message M6 au serveur SM-DP+ 30 de refus ou de confirmation de l'exécution de l'acte d'administration. Ce message M6 est retransmis sous la forme d'un message M7 par le serveur SM-DP+ 30 au module de sécurité 20.

Le module de sécurité 20 envoie au dispositif utilisateur 10 un message M8 de refus ou de confirmation de l'exécution du message M3 de commande d'administration d'une souscription. Ce message M8 est reçu dans une étape E13.

Le dispositif utilisateur 10 peut alors en informer l'utilisateur ou le gestionnaire de flotte par l'intermédiaire de son interface homme-machine.

Le procédé d'administration d'une souscription auprès d'un opérateur va maintenant être décrit en relation avec les **figures 2a et 2b** dans un deuxième mode particulier de réalisation.

Dans ce deuxième mode particulier de réalisation, les étapes décrites précédemment en relation avec le premier mode sont identiques jusqu'à la réception par le serveur de contrôle opérationnel 40 du message M5 de requête d'exécution d'un acte d'administration dans l'étape H1.

Le serveur de contrôle opérationnel 40 détermine en fonction de l'acte d'administration à exécuter et de la souscription courante, reçus dans le message M5, les actions qui doivent être mises en œuvre dans le système d'information de l'opérateur. Ces actions ne sont pas plus détaillées ici. Toujours dans cette étape H1, le serveur de contrôle opérationnel 40 détecte qu'une interaction avec l'utilisateur du dispositif 10 est requise. Le serveur de contrôle opérationnel 40 mémorise le contexte de cette requête d'exécution d'un acte d'administration et associe une référence Ref à ce contexte.

A l'étape H2, le serveur de contrôle opérationnel 40 envoie un message M6 au serveur SM-DP+ 30 de refus ou de confirmation de l'exécution de l'acte d'administration. Ce message M6 comprend notamment une adresse de localisation ou adresse universelle URL (pour « Uniform Ressource Locator ») du portail 50 et la référence Ref associée au contexte d'exécution. Ce message M6 est retransmis sous la forme d'un message M7 par le serveur SM-DP+ 30 au module de sécurité 20.

Le module de sécurité 20 envoie au dispositif utilisateur 10, plus précisément l'application LPA, un message M8 de refus ou de confirmation de l'exécution du message M3 de commande d'administration d'une souscription. Ce message M8 est reçu dans une étape E13.

La suite de la description de ce deuxième mode est maintenant effectuée en référence à la figure 2b.

Dans une étape E14, l'application LPA détecte que le message M8 demande une interaction complémentaire de l'utilisateur du dispositif 10 avec le système d'information de l'opérateur pour finaliser la demande d'exécution de l'acte d'administration. L'application LPA extrait l'adresse de localisation URL et la référence Ref du message M8 et déclenche par un message M9 une interaction avec l'utilisateur par l'intermédiaire de l'exécution d'une application de type Webview. Cette application établit une connexion (message M10) avec le portail 50 au moyen de l'adresse de localisation et transmet la référence Ref.

Le portail 50 reçoit le message M10 dans une étape I1 et demande au serveur de contrôle opérationnel 40 le contexte associé à la référence Ref. Dans une étape H3, le serveur de contrôle opérationnel 40 envoie au portail 50 le contexte de la requête d'exécution de l'acte d'administration qu'il a mémorisé en association avec la référence Ref. Cet échange est représenté sur la figure 2b par un échange M11.

Le portail 50 interagit alors avec l'utilisateur par l'intermédiaire de l'application s'exécutant sur la dispositif utilisateur 10 (échange M12) en fonction du contexte de la requête d'exécution afin d'obtenir des informations complémentaires. Il peut s'agir à titre d'exemple d'une confirmation de la demande par l'utilisateur au moyen d'un code de sécurité. Il peut s'agir également d'informations commerciales requises par le serveur de contrôle commercial 42.

Une fois un accord établi pour l'exécution de l'acte d'administration, des actions sont mises en œuvre dans le système d'information de l'opérateur. Le serveur de contrôle commercial 42 est informé (message M13) de l'accord et des actions à mettre en place. Ces actions ne sont pas plus détaillées ici. Le système de support opérationnel OSS, et en particulier le serveur de contrôle opérationnel 40, reçoit des ordres (message M14) à exécuter. Si besoin, le serveur SM-DP+ 30 reçoit également des ordres à exécuter. L'exécution de l'acte d'administration se termine par une suppression du contexte auquel est associée la référence.

Dans le deuxième mode de réalisation tel que décrit, l'adresse de localisation URL est commune à toutes les requêtes et le contexte associé à la requête d'exécution de l'acte d'administration est retrouvé en fonction d'une référence. Alternativement, l'adresse de localisation est propre au contexte associé à la requête d'exécution de l'acte d'administration et permet de retrouver le contexte.

Dans les modes de réalisation décrits, un acte d'administration en relation avec une souscription a ainsi pu être effectué de manière simple par l'utilisateur ou le gestionnaire de flotte. Le deuxième mode de réalisation présente en outre l'avantage de permettre une interaction enrichie avec l'utilisateur ou le gestionnaire de flotte.

Dans les modes de réalisation décrits, l'adresse de contact du serveur SM-DP+, la donnée d'identification et la donnée de souscription ID_S ont été fournies dans des données associées au profil d'accès lors du téléchargement de celui-ci dans le module de sécurité 20.

Dans un autre mode particulier de réalisation, seule l'adresse de contact du serveur SM-DP+ est fournie dans des données associées au profil d'accès lors du téléchargement de celui-ci dans le module de sécurité 20. L'identifiant de profil d'accès ICCID est transmis dans les différents messages échangés en tant que donnée permettant au serveur SM-DP+ d'identifier et d'interroger un serveur de contrôle et en tant qu'identifiant de souscription. Le serveur SM-DP+ 30 détermine à partir de l'identifiant de profil d'accès ICCID l'opérateur concerné et ainsi le serveur de contrôle à contacter. Le serveur de contrôle opérationnel 40 peut obtenir à partir de l'identifiant de profil d'accès ICCID le numéro de contrat associé par interrogation de la base de données 41. Ceci permet de limiter les modifications à apporter au profil d'accès.

Dans un autre mode particulier de réalisation, la donnée d'identification est obtenue par un des équipements (dispositif utilisateur 10, serveur SM-DP+ 30) à partir de l'identifiant d'accès au réseau, connu sous le nom IMSI, notamment à partir des champs MCC et MNC.

Dans un mode particulier de réalisation, l'identifiant de souscription ID_S est renseigné par l'utilisateur ou le gestionnaire de flotte au moyen de l'interface homme-machine de l'application proposée par l'opérateur sur le dispositif utilisateur 10 en complément de la commande d'exécution d'un acte d'administration.

Dans un mode particulier de réalisation, un code de sécurité est fourni par l'utilisateur au moyen de l'interface homme-machine d'une application proposée par l'opérateur sur le premier dispositif utilisateur 10. Ce code de sécurité peut par exemple être fourni en même temps que la commande d'association. Dans une variante de réalisation, le code de sécurité est vérifié par le module de sécurité 20. Dans une autre variante de réalisation, le code de sécurité est transmis dans les différents messages M3 (du dispositif utilisateur 10 au module de sécurité 20), M4 (du module de sécurité 20 au serveur SM-DP+ 30) et M5 (du serveur SM-DP+ 30 au serveur de contrôle opérationnel 40). Le serveur de contrôle opérationnel 40 vérifie alors le code de sécurité lors de l'étape H1. Ce code de sécurité permet de vérifier que l'exécution de l'acte d'administration a bien été demandée par un utilisateur autorisé. Il est ici souligné que ce code de sécurité peut dans certains modes particuliers de réalisation correspondre à celui du module de sécurité ou bien celui du dispositif utilisateur.

Dans un exemple de réalisation, l'utilisateur du dispositif 10 souhaite modifier sa souscription vers une souscription comprenant plusieurs modules de sécurité (« multi-SIM »). Le procédé est une première fois mis en œuvre pour modifier la souscription. Puis, le procédé est une deuxième fois mis en œuvre pour demander la préparation d'un profil d'accès à partir du dispositif 10 pour le deuxième module de sécurité 21. En retour, le dispositif 10 reçoit un code d'activation qu'il transmet au deuxième dispositif 11, par exemple par l'intermédiaire d'une liaison de courte portée. Le deuxième dispositif 11 et le deuxième module de sécurité 21 obtiennent alors le profil d'accès par téléchargement à partir du serveur SM-DP+.

Aucune limitation n'est attachée à ces différents modes de réalisation et l'homme du métier est à même d'en définir d'autres permettant de commander par l'intermédiaire du serveur chargé de la préparation des données de gestion de souscription une exécution d'un acte d'administration à partir d'un dispositif utilisateur auquel est associé un module de sécurité avec un profil d'accès installé dans le cadre d'une souscription.

La **figure 3** illustre de manière schématique un dispositif utilisateur 10 dans un mode de réalisation particulier. Un module de sécurité 20 est associé à ce dispositif utilisateur 10. Ce module de sécurité 20 a obtenu un profil d'accès à un réseau de communication en relation avec une souscription pour le dispositif utilisateur 10 auprès d'un opérateur. Le dispositif utilisateur 10 comprend notamment :
- un processeur 100 pour exécuter des instructions de code de modules logiciels ;
- une zone mémoire 104, agencée pour mémoriser une application qui comprend des instructions de code pour mettre en œuvre les étapes du procédé d'administration d'une souscription ;
- une mémoire de stockage, non représentée, agencée pour stocker des données utilisées lors de la mise en œuvre du procédé d'administration ;
- un module 101 de communication, agencé pour accéder à un réseau de communication, notamment pour envoyer et recevoir des messages ;
- un module 103 d'interaction, agencé pour recevoir une commande d'association d'un deuxième dispositif utilisateur 11 à cette souscription ;
- un module de commande 102, agencé pour obtenir à partir d'un profil d'accès au réseau de communication installé dans le module de sécurité une adresse de contact d'un serveur (30) configuré pour préparer des données de gestion de souscription et pour commander au module de sécurité d'envoyer une requête d'exécution d'un acte d'administration en relation avec une souscription auprès d'un opérateur, la requête étant adressée à l'adresse de contact du serveur et comprenant une donnée permettant audit serveur de faire suivre la requête à un serveur de contrôle.

Le module 101 de communication est notamment agencé pour recevoir une confirmation d'exécution dudit acte d'administration.

Dans un mode de réalisation particulier, le module de commande 102 est également agencé pour mettre en œuvre une application LPA.

Dans un mode de réalisation particulier, le module d'interaction 103 est agencé pour interagir avec un utilisateur du dispositif utilisateur 10 par l'intermédiaire d'une interface homme-machine.

Dans un mode de réalisation particulier, le module de commande 102 est également agencé pour obtenir la donnée permettant au serveur d'interroger le serveur de contrôle à partir du profil d'accès.

Il est ici souligné que le dispositif utilisateur 10 comprend également d'autres modules de traitement, non représentés sur la figure 3, agencés pour mettre en œuvre les différentes fonctions de dispositif utilisateur.

La **figure 4** illustre de manière schématique un serveur 30 configuré pour préparer des données de gestion de souscription dans un mode de réalisation particulier. Plus précisément, ce serveur 30 est un serveur SM-DP+. Le serveur 30 comprend notamment :
- un processeur 300 pour exécuter des instructions de code de modules logiciels ;
- une zone mémoire 303, agencée pour mémoriser une application qui comprend des instructions de code pour mettre en œuvre les étapes du procédé d'administration d'une souscription ;
- une mémoire de stockage, non représentée, agencée pour stocker des données utilisées lors de la mise en œuvre du procédé d'administration ;
- un module 301 de communication, agencé pour communiquer avec des modules de sécurité et avec des serveurs d'un opérateur ;
- un module de traitement (302), agencé pour :
   - recevoir une requête d'exécution d'un acte d'administration en relation avec une souscription auprès d'un opérateur en provenance d'un module de sécurité (20), ladite souscription permettant un accès à un réseau de communication pour le module de sécurité associé à un dispositif utilisateur (10), la requête étant adressée à l'adresse de contact du serveur et comprenant une donnée permettant audit serveur de faire suivre la requête à un serveur de contrôle, ladite adresse ayant été obtenue à partir d'un profil d'accès au réseau de communication installé dans le module de sécurité ;
   - transmettre la requête d'exécution au serveur de contrôle en fonction de ladite donnée et pour transmettre une confirmation d'exécution dudit acte d'administration reçue du serveur de contrôle vers le dispositif utilisateur.

Il est ici souligné que le serveur 30 comprend également d'autres modules de traitement, non représentés sur la figure 4, agencés pour mettre en œuvre les différentes fonctions de serveur SM-DP+.

La technique d'administration d'une souscription est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 102, 103 sont agencés pour mettre en œuvre le procédé d'administration précédemment décrit. Il s'agit de préférence de modules logiciels comprenant des instructions logicielles pour faire exécuter celles des étapes du procédé d'administration d'une souscription précédemment décrit, mises en œuvre par un dispositif utilisateur. L'invention concerne donc aussi :
- un programme pour un dispositif utilisateur, comprenant des instructions de code de programme destinées à commander l'exécution des étapes du procédé d'administration d'une souscription précédemment décrit, lorsque ledit programme est exécuté par ce dispositif ;
- un support d'enregistrement lisible par un dispositif sur lequel est enregistré le programme pour un dispositif.

Dans un mode de réalisation particulier, le module 302 est agencé pour mettre en œuvre le procédé d'administration précédemment décrit. Il s'agit de préférence de modules logiciels comprenant des instructions logicielles pour faire exécuter celles des étapes du procédé d'administration d'une souscription précédemment décrit, mises en œuvre par un serveur. L'invention concerne donc aussi :
- un programme pour un serveur, comprenant des instructions de code de programme destinées à commander l'exécution des étapes du procédé d'administration d'une souscription précédemment décrit, lorsque ledit programme est exécuté par ce serveur ;
- un support d'enregistrement lisible par un serveur sur lequel est enregistré le programme pour un serveur.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne en outre un système 1 comprenant :
- un dispositif utilisateur 10 tel que décrit précédemment,
- un serveur 30 configuré pour préparer des données de gestion de souscription tel que décrit précédemment, et
- un serveur de contrôle 40.

Le serveur de contrôle comprend :
- un module de traitement, agencé pour exécuter un acte d'administration en relation avec une souscription en réponse à une requête d'exécution reçue du serveur configuré pour préparer des données de gestion de souscription et pour envoyer une confirmation d'exécution dudit acte d'administration vers le serveur configuré pour préparer des données de gestion de souscription.

## Revendications

1. Procédé d'administration d'une souscription auprès d'un opérateur, ladite souscription permettant un accès à un réseau de communication pour un module de sécurité (20) associé à un dispositif utilisateur (10), ledit procédé comprenant :
- une obtention (E11) par le dispositif utilisateur à partir d'un profil d'accès au réseau de communication installé dans le module de sécurité d'une adresse de contact d'un serveur (30) configuré pour préparer des données de gestion de souscription ;
- un envoi (FI 1) par le module de sécurité d'une requête d'exécution d'un acte d'administration en relation avec ladite souscription, la requête étant adressée à l'adresse de contact du serveur et comprenant une donnée d'identification permettant audit serveur de faire suivre la requête à un serveur de contrôle de l'opérateur identifié par ladite donnée d'identification ;
- une réception (E13) par le dispositif utilisateur d'une confirmation d'exécution dudit acte d'administration.

2. Procédé d'administration selon la revendication 1, dans lequel la confirmation d'exécution comprend une adresse de localisation d'un portail auquel le dispositif utilisateur se connecte.

3. Procédé d'administration selon la revendication 2, dans lequel la confirmation d'exécution comprend en outre une référence associée à un contexte de la requête d'exécution de l'acte d'administration.

4. Procédé d'administration selon la revendication 1, dans lequel la donnée permettant au serveur d'interroger le serveur de contrôle est obtenue à partir du profil d'accès.

5. Procédé d'administration selon la revendication 1, dans lequel la requête envoyée comprend en outre un identifiant de souscription auprès de l'opérateur.

6. Procédé d'administration selon la revendication 1, dans lequel l'acte d'administration appartient au groupe comprenant :
- une demande de modification d'une souscription ;
- une demande d'un code d'activation ;
- une suspension du profil d'accès.

7. Procédé d'administration d'une souscription auprès d'un opérateur, ladite souscription permettant un accès à un réseau de communication pour un module de sécurité (20) associé à un dispositif utilisateur (10), ledit procédé comprenant :
- une réception (G1) par un serveur (30) configuré pour préparer des données de gestion de souscription d'une requête d'exécution d'un acte d'administration en relation avec ladite souscription en provenance du module de sécurité, la requête étant adressée à l'adresse de contact du serveur et comprenant une donnée d'identification permettant audit serveur de faire suivre la requête à un serveur de contrôle de l'opérateur identifié par ladite donnée d'identification, ladite adresse ayant été obtenue à partir d'un profil d'accès au réseau de communication installé dans le module de sécurité ;
- une transmission (G1) de la requête d'exécution par ledit serveur au serveur de contrôle en fonction de ladite donnée ;
- une transmission d'une confirmation d'exécution dudit acte d'administration reçue du serveur de contrôle vers le dispositif utilisateur.

8. Dispositif utilisateur (10) auquel est associé un module de sécurité (20), ledit dispositif comprenant :
- un module de commande (102), agencé pour obtenir à partir d'un profil d'accès au réseau de communication installé dans le module de sécurité une adresse de contact d'un serveur (30) configuré pour préparer des données de gestion de souscription et pour commander au module de sécurité d'envoyer une requête d'exécution d'un acte d'administration en relation avec une souscription auprès d'un opérateur, ladite souscription permettant un accès à un réseau de communication pour le module de sécurité (20) associé au dispositif utilisateur (10), la requête étant adressée à l'adresse de contact du serveur et comprenant une donnée d'identification permettant audit serveur de faire suivre la requête à un serveur de contrôle de l'opérateur identifié par ladite donnée d'identification ;
- un module de réception (101) d'une confirmation d'exécution dudit acte d'administration.

9. Serveur (30) configuré pour préparer des données de gestion de souscription, ledit serveur comprenant :
- un module de traitement (302), agencé pour recevoir une requête d'exécution d'un acte d'administration en relation avec une souscription auprès d'un opérateur en provenance d'un module de sécurité (20), ladite souscription permettant un accès à un réseau de communication pour le module de sécurité associé à un dispositif utilisateur (10), la requête étant adressée à l'adresse de contact du serveur et comprenant une donnée d'identification permettant audit serveur de faire suivre la requête à un serveur de contrôle de l'opérateur identifié par ladite donnée d'identification, ladite adresse ayant été obtenue à partir d'un profil d'accès au réseau de communication installé dans le module de sécurité, et pour transmettre la requête d'exécution au serveur de contrôle en fonction de ladite donnée et pour transmettre une confirmation d'exécution dudit acte d'administration reçue du serveur de contrôle vers le dispositif utilisateur.

10. Système (1) comprenant un dispositif utilisateur (10) selon la revendication 8, un serveur (30) configuré pour préparer des données de gestion de souscription selon la revendication 9 et un serveur de contrôle (40), ledit serveur de contrôle comprenant :
- un module de traitement, agencé pour exécuter un acte d'administration en relation avec une souscription en réponse à une requête d'exécution reçue du serveur configuré pour préparer des données de gestion de souscription et pour envoyer une confirmation d'exécution dudit acte d'administration vers le serveur configuré pour préparer des données de gestion de souscription.

11. Programme pour un dispositif utilisateur, comprenant des instructions de code de programme destinées à commander l'exécution de celles des étapes du procédé d'administration d'une souscription selon l'une des revendications 1 à 6 mises en œuvre par le dispositif, lorsque ledit programme est exécuté par ledit dispositif.

12. Support d'enregistrement lisible par un dispositif utilisateur sur lequel est enregistré le programme selon la revendication 11.

13. Programme pour un serveur, comprenant des instructions de code de programme destinées à commander l'exécution de celles des étapes du procédé d'administration d'une souscription selon la revendication 7 mises en œuvre par le serveur, lorsque ledit programme est exécuté par ledit serveur.

14. Support d'enregistrement lisible par un serveur sur lequel est enregistré le programme selon la revendication 13.

## Patentansprüche

1. Verfahren zur Verwaltung eines Abonnements bei einem Betreiber, wobei das Abonnement einem Sicherheitsmodul (20), das mit einer Benutzervorrichtung (10) assoziiert ist, einen Zugang zu einem Kommunikationsnetzwerk gestattet, wobei das Verfahren Folgendes beinhaltet:
- Erhalten (E11), durch die Benutzervorrichtung anhand eines in dem Sicherheitsmodul installierten Zugangsprofils zu dem Kommunikationsnetzwerk, einer Kontaktadresse eines Servers (30), der dazu konfiguriert ist, Abonnementführungsdaten zu erstellen;
- Senden (Fll), durch das Sicherheitsmodul, einer Anfrage nach Ausführung eines Verwaltungsvorgangs in Verbindung mit dem Abonnement, wobei die Anfrage an die Kontaktadresse des Servers adressiert ist und ein Identifikationsdatenelement beinhaltet, das es dem Server gestattet, die Anfrage an einen Kontrollserver des Betreibers, der durch das Identifikationsdatenelement identifiziert wird, weiterzuleiten;
- Empfangen (E13), durch die Benutzervorrichtung, einer Bestätigung der Ausführung des Verwaltungsvorgangs.

2. Verwaltungsverfahren nach Anspruch 1, wobei die Ausführungsbestätigung eine Lokalisierungsadresse eines Portals, mit dem sich die Benutzervorrichtung verbindet, beinhaltet.

3. Verwaltungsverfahren nach Anspruch 2, wobei die Ausführungsbestätigung ferner eine Referenz beinhaltet, die mit einem Kontext der Anfrage nach Ausführung des Verwaltungsvorgangs assoziiert ist.

4. Verwaltungsverfahren nach Anspruch 1, wobei das Datenelement, das es dem Server gestattet, den Kontrollserver abzufragen, anhand des Zugangsprofils erhalten wird.

5. Verwaltungsverfahren nach Anspruch 1, wobei die gesendete Anfrage ferner eine Abonnementkennung bei dem Betreiber beinhaltet.

6. Verwaltungsverfahren nach Anspruch 1, wobei der Verwaltungsvorgang zu der Gruppe gehört, die Folgendes beinhaltet:
- eine Anforderung einer Änderung eines Abonnements;
- eine Anforderung eines Aktivierungscodes;
- eine Aussetzung des Zugangsprofils.

7. Verfahren zur Verwaltung eines Abonnements bei einem Betreiber, wobei das Abonnement einem Sicherheitsmodul (20), das mit einer Benutzervorrichtung (10) assoziiert ist, einen Zugang zu einem Kommunikationsnetzwerk gestattet, wobei das Verfahren Folgendes beinhaltet:
- Empfangen (G1), durch einen Server (30), der dazu konfiguriert ist, Abonnementführungsdaten zu erstellen, einer Anfrage nach Ausführung eines Verwaltungsvorgangs in Verbindung mit dem Abonnement von dem Sicherheitsmodul, wobei die Anfrage an die Kontaktadresse des Servers adressiert ist und ein Identifikationsdatenelement beinhaltet, das es dem Server gestattet, die Anfrage an einen Kontrollserver des Betreibers, der durch das Identifikationsdatenelement identifiziert wird, weiterzuleiten, wobei die Adresse anhand eines Zugangsprofils zu dem Kommunikationsnetzwerk, das in dem Sicherheitsmodul installiert ist, erhalten wurde;
- Übertragen (G1) der Ausführungsanfrage durch den Server an den Kontrollserver in Abhängigkeit von dem Datenelement;
- Übertragen einer Bestätigung der Ausführung des Verwaltungsvorgangs, die von dem Kontrollserver empfangen wird, an die Benutzervorrichtung.

8. Benutzervorrichtung (10), mit der ein Sicherheitsmodul (20) assoziiert ist, wobei die Vorrichtung Folgendes beinhaltet:
- ein Steuermodul (102), das zu Folgendem angeordnet ist: Erhalten, anhand eines Zugangsprofils zu dem Kommunikationsnetzwerk, das in dem Sicherheitsmodul installiert ist, einer Kontaktadresse eines Servers (30), der dazu konfiguriert ist, Abonnementführungsdaten zu erstellen, und Steuern des Sicherheitsmoduls derart, dass dieses eine Anfrage nach Ausführung eines Verwaltungsvorgangs in Verbindung mit dem Abonnement bei einem Betreiber sendet, wobei das Abonnement dem Sicherheitsmodul (20), das mit der Benutzervorrichtung (10) assoziiert ist, einen Zugang zu einem Kommunikationsnetzwerk gestattet, wobei die Anfrage an die Kontaktadresse des Servers adressiert ist und ein Identifikationsdatenelement beinhaltet, das es dem Server gestattet, die Anfrage an einen Kontrollserver des Betreibers, der durch das Identifikationsdatenelement identifiziert wird, weiterzuleiten;
- ein Modul zum Empfangen (101) einer Bestätigung der Ausführung des Verwaltungsvorgangs.

9. Server (30), der dazu konfiguriert ist, Abonnementführungsdaten zu erstellen, wobei der Server Folgendes beinhaltet:
- ein Verarbeitungsmodul (302), das zu Folgendem angeordnet ist: Empfangen einer Anfrage nach Ausführung eines Verwaltungsvorgangs in Verbindung mit einem Abonnement bei einem Betreiber von einem Sicherheitsmodul (20), wobei das Abonnement dem Sicherheitsmodul, das mit einer Benutzervorrichtung (10) assoziiert ist, einen Zugang zu einem Kommunikationsnetzwerk gestattet, wobei die Anfrage an die Kontaktadresse des Servers adressiert ist und ein Identifikationsdatenelement beinhaltet, das es dem Server gestattet, die Anfrage an einen Kontrollserver des Betreibers, der durch das Identifikationsdatenelement identifiziert wird, weiterzuleiten, wobei die Adresse anhand eines Zugangsprofils zu dem Kommunikationsnetzwerk, das in dem Sicherheitsmodul installiert ist, erhalten wurde, und Übertragen der Ausführungsanfrage an den Kontrollserver in Abhängigkeit von dem Datenelement und Übertragen einer Bestätigung der Ausführung des Verwaltungsvorgangs, die von dem Kontrollserver empfangen wird, an die Benutzervorrichtung.

10. System (1), das eine Benutzervorrichtung (10) nach Anspruch 8, einen Server (30), der dazu konfiguriert ist, Abonnementführungsdaten zu erstellen, nach Anspruch 9 und einen Kontrollserver (40) beinhaltet, wobei der Kontrollserver Folgendes beinhaltet:
- ein Verarbeitungsmodul, das zu Folgendem angeordnet ist: Ausführen eines Verwaltungsvorgangs in Verbindung mit einem Abonnement als Reaktion auf eine Ausführungsanfrage, die von dem Server, der dazu konfiguriert ist, Abonnementführungsdaten zu erstellen, empfangen wird, und Senden einer Bestätigung der Ausführung des Verwaltungsvorgangs an den Server, der dazu konfiguriert ist, Abonnementführungsdaten zu erstellen.

11. Programm für eine Benutzervorrichtung, das Programmcodeanweisungen beinhaltet, die dazu bestimmt sind, die Ausführung derjenigen der Schritte des Verfahrens zur Verwaltung eines Abonnements nach einem der Ansprüche 1 bis 6, die durch die Vorrichtung umgesetzt werden, zu steuern, wenn das Programm durch die Vorrichtung ausgeführt wird.

12. Durch eine Benutzervorrichtung lesbares Aufzeichnungsmedium, auf dem das Programm nach Anspruch 11 aufgezeichnet ist.

13. Programm für einen Server, das Programmcodeanweisungen beinhaltet, die dazu bestimmt sind, die Ausführung derjenigen der Schritte des Verfahrens zur Verwaltung eines Abonnements nach Anspruch 7, die durch den Server umgesetzt werden, zu steuern, wenn das Programm durch den Server ausgeführt wird.

14. Durch einen Server lesbares Aufzeichnungsmedium, auf dem das Programm nach Anspruch 13 aufgezeichnet ist.

## Claims

1. Method for administering a subscription to an operator, said subscription allowing access to a communication network for a security module (20) associated with a user device (10), said method comprising:
- obtention (E11), by the user device, from an access profile for accessing the communication network installed in the security module, of a contact address of a server (30) configured to prepare subscription management data;
- sending (F11), by the security module, of a request for execution of an administrative act in relation to said subscription, the request being addressed to the contact address of the server and comprising an identification datum allowing said server to forward the request to a control server of the operator identified by said identification datum;
- reception (E13), by the user device, of a confirmation of execution of said administrative act.

2. Administration method according to Claim 1, wherein the confirmation of execution comprises a location address of a portal to which the user device connects.

3. Administration method according to Claim 2, wherein the confirmation of execution further comprises a reference associated with a context of the request for execution of the administrative act.

4. Administration method according to Claim 1, wherein the datum allowing the server to interrogate the control server is obtained from the access profile.

5. Administration method according to Claim 1, wherein the request sent further comprises an identifier of a subscription to the operator.

6. Administration method according to Claim 1, wherein the administrative act belongs to the group comprising:
- a request for modification of a subscription;
- a request for an activation code;
- a suspension of the access profile.

7. Method for administering a subscription to an operator, said subscription allowing access to a communication network for a security module (20) associated with a user device (10), said method comprising:
- reception (G1), by a server (30) configured to prepare subscription management data, of a request for execution of an administrative act in relation to said subscription from the security module, the request being addressed to the contact address of the server and comprising an identification datum allowing said server to forward the request to a control server of the operator identified by said identification datum, said address having been obtained from an access profile for accessing the communication network installed in the security module;
- transmission (G1) of the execution request, by said server, to the control server on the basis of said datum;
- transmission of a confirmation of execution of said administrative act received from the control server to the user device.

8. User device (10) with which a security module (20) is associated, said device comprising:
- a control module (102) designed to obtain, from an access profile for accessing the communication network installed in the security module, a contact address of a server (30) configured to prepare subscription management data and to command the security module to send a request for execution of an administrative act in relation to a subscription to an operator, said subscription allowing access to a communication network for the security module (20) associated with the user device (10), the request being addressed to the contact address of the server and comprising an identification datum allowing said server to forward the request to a control server of the operator identified by said identification datum;
- a reception module (101) for receiving a confirmation of execution of said administrative act.

9. Server (30) configured to prepare subscription management data, said server comprising:
- a processing module (302) designed to receive a request for execution of an administrative act in relation to a subscription to an operator from a security module (20), said subscription allowing access to a communication network for the security module associated with a user device (10), the request being addressed to the contact address of the server and comprising an identification datum allowing said server to forward the request to a control server of the operator identified by said identification datum, said address having been obtained from an access profile for accessing the communication network installed in the security module, and to transmit the execution request to the control server on the basis of said datum and to transmit a confirmation of execution of said administrative act received from the control server to the user device.

10. System (1) comprising a user device (10) according to Claim 8, a server (30) configured to prepare subscription management data according to Claim 9 and a control server (40), said control server comprising:
- a processing module designed to execute an administrative act in relation to a subscription in response to an execution request received from the server configured to prepare subscription management data, and to send a confirmation of execution of said administrative act to the server configured to prepare subscription management data.

11. Program for a user device, comprising program code instructions intended to control the execution of those of the steps of the method for administering a subscription according to one of Claims 1 to 6 that are implemented by the device, when said program is executed by said device.

12. Recording medium readable by a user device, on which the program according to Claim 11 is recorded.

13. Program for a server, comprising program code instructions intended to control the execution of those of the steps of the method for administering a subscription according to Claim 7 that are implemented by the server, when said program is executed by said server.

14. Recording medium readable by a server, on which the program according to Claim 13 is recorded.
